# EUROPÄISCHE PATENTSCHRIFT

(11) **EP 2 507 174 B1**
(45) Veröffentlichungstag und Bekanntmachung des Hinweises auf die Patenterteilung: **06.11.2013**
(21) Anmeldenummer: 10793199.0
(22) Anmeldetag: 06.12.2010
(51) Int. Cl.: C01B 33/107

(54) **VERFAHREN ZUR HERSTELLUNG VON HALOGENIERTEN POLYSILANEN**
METHOD FOR PRODUCING HALOGENATED POLYSILANES
PROCÉDÉ DE PRÉPARATION DE POLYSILANES HALOGÉNÉS

(30) Priorität: 04.12.2009 DE 102009056731
(43) Veröffentlichungstag der Anmeldung: 10.10.2012
(73) Patentinhaber: Spawnt Private S.à.r.l., 1148 Luxembourg (LU)
(72) Erfinder: BAUCH, Christian, 06774 Muldenstein (DE); HOLL, Sven, 65558 Gückigen (DE); DELTSCHEW, Rumen, 04319 Leipzig (DE); MOHSSENI-ALA, Seyed-Javad, 06766 Bitterfeld-Wolfen (DE); LUBENTSOV, Andrey, 04288 Leipzig (DE)
(74) Vertreter: Epping - Hermann - Fischer
(86) Internationale Anmeldenummer: PCT/EP2010/068993
(87) Internationale Veröffentlichungsnummer: WO 2011/067416

(56) Entgegenhaltungen:
- EP-A1- 1 867 604
- WO-A1-2009/047238

## Beschreibung

Die vorliegende Erfindung betrifft ein Verfahren zur Herstellung halogenierter Polysilane als reine Verbindung oder Gemisch von Verbindungen, das eine besondere Reinheit in Bezug auf unter anderem borhaltige Verbindungen aufweist.

Halogenierte Polysilane dienen beispielsweise zur Erzeugung von hochreinem Silicium in der Halbleitertechnologie beispielsweise der Solarzellenindustrie. Aus diesem Grunde sind oftmals sehr hohe Reinheiten für halogenierte Polysilane erforderlich. Die PCT-Anmeldung WO 2009/047238 A1 beschreibt ein Verfahren zur Herstellung von hochreinem Hexachlordisilan, bei dem während der Destiallation eines Hexachlordisilan enthaltenden Gemisches Wasser in Mengen von maximal 10 ppbw (parts per billion per weight) anwesend ist. Dieses Dokument beschreibt, dass die Reaktion von Wasser mit Chlorsilanen unter anderem zur Bildung von Disiloxanen führen kann die sich nachteilig auf die Reinheit des gewünschten Hexachlordisilans auswirken.

Es ist eine Aufgabe von Ausführungsformen der Erfindung halogenierte Polysilane mit erhöhter Reinheit herzustellen, die beispielsweise auch den Anforderungen für Anwendungen in der Fotovoltaik genügen.

Diese Aufgabe wird durch ein Verfahren nach Anspruch 1 gelöst. Weitere vorteilhafte Ausgestaltungen des erfindungsgemäßen Verfahrens sind Gegenstand weiterer abhängiger Patentansprüche.

Eine Ausführungsform der Erfindung stellt ein Verfahren zur Herstellung eines halogenierten Polysilans der allgemeinen Formel

HₚSiₙX₍₂ₙ₊₂₎₋ₚ mit n = 1 bis 50; 0 ≤ p ≤ 2n+1 und X = F, Cl, Br, I,

als Einzelverbindung oder Gemisch von Verbindungen aus einem Gemisch zur Verfügung, wobei das Gemisch bereits das das halogenierte Polysilan enthält oder in dem Gemisch das halogenierte Polysilan gebildet wird. Das Gemisch enthält zusätzlich Bor-haltige Verunreinigungen. Das Verfahren umfasst dabei die Verfahrensschritte, dass
a) das Gemisch mit mindestens 1 ppbw (parts per billon per weight) eines Siloxan-bildenden Oxidationsmittels oder mit Siloxan selbst versetzt wird, wobei die Bor-haltigen Verunreinigungen mit den Siloxanen Verbindungen mit einer von den halogenierten Polysilanen unterschiedlichen Flüchtigkeit und/oder Löslichkeit bilden, und
b) das halogenierte Polysilan von diesen Verbindungen abgetrennt wird,
   - wobei während des Verfahrens maximal 1 ppmw Wasser und minimal 1 ppbw Siloxane anwesend sind.

Die Erfinder haben festgestellt, dass Bor-haltige Verunreinigungen in den halogenierte Polysilanen mit Siloxanen, beziehungsweise bei Zugabe von Oxidationsmitteln, die die Bildung von Siloxanen begünstigen, Verbindungen, beispielsweise Borsäuren bildet, deren Flüchtigkeit und/oder Löslichkeit sich von den halogenierte Polysilanen unterscheidet, mit der Folge, dass diese gebildeten Bor-haltigen Verbindungen in einem nachfolgenden Verfahrensschritt b) von dem halogenierten Polysilan abgetrennt werden können, so dass ein halogeniertes Polysilan mit erhöhter Reinheit resultiert.

Hohe Verunreinigungen mit Feuchtigkeit, beispielsweise Wasser können vor allem bei Oligo- und Polysilanen zur Bildung von explosiven Ablagerungen, sogenannten "poppy gels" führen, deren Bildung vermieden, beziehungsweise vermindert werden sollte. Gleichzeitig können bei Anwesenheit von Feuchtigkeit, wie Wasser, durch Polykondensationsreaktionen beziehungsweise Vernetzung Silanole und letztendlich polymere kieselgelähnliche Produkte gebildet werden, die sich in den Rohrleitungen der Reaktoren niederschlagen und eventuell zu Verstopfungen führen können. Wasser reagiert auch beispielsweise in unerwünschter Weise mit den Silicium-Halogen-Bindungen in den halogenierten Polysilanen, während die Siloxane in erster Linie mit den Bor-haltigen Verunreinigungen Reaktionen eingehen. Um die Bildung der nicht gewünschten "poppy gels" beziehungsweise Kieselsäure-ähnlichen Ablagerungen zu vermindern oder sogar zu vermeiden sind während des erfindungsgemäßen Verfahrens maximal 1 ppmw Wasser anwesend. Dies kann beispielsweise durch eine Trocknung der zugeleiteten halogenierten Polysilangemische oder der Ausgangsprodukte zur Bildung der halogenierten Polysilane erreicht werden, wobei die Trocknung nach beliebigen, bisher bekannten Verfahren zur Trocknung von Gasen und Flüssigkeiten erfolgen kann.

Im Gegensatz zu Wasser setzen die Siloxan-bildenden Oxidationsmittel, beispielsweise reaktive Sauerstoffspezies frei, die in erster Linie Bindungen zwischen zwei Si-Atomen unter Bildung von Siloxanen angreifen können.

Als Siloxane können beispielsweise Verbindungen der folgenden allgemeinen Formel

R¹R²R³Si-O-SiR⁹R⁵R⁶,

wobei R¹ bis R⁶ unabhängig voneinander Cl, F, Br, I, H, SiR¹R²R³ und -O-SiR¹R²R³ sein können,
verwendet werden. Diese Siloxane können dabei auch Disiloxane umfassen, beispielsweise Hexachlordisiloxan, das beispielsweise durch Reaktion von Sauerstoff oder reaktiven Sauerstoffspezies mit Hexachlordisilan gebildet werden kann. Als konkrete Siloxanverbindung ist auch das Trichlorsilyl-pentachlordisiloxan möglich, das beispielsweise durch Reaktion von Octachlortrisilan mit Sauerstoff gebildet werden kann. Unter die allgemeine Formel fallen ebenfalls Silole die eine Si-OH Gruppe aufweisen. Möglich sind auch Siloxane mit mehr als einer Si-O-S-Bindung.

Derartige Siloxane, beziehungsweise die Siloxan-bildenden Oxidationsmittel neigen im Gegensatz Feuchtigkeit, wie Wasser nicht dazu, mit halogenierten Polysilanen unkontrollierte Polymerisationen einzugehen, die die Bildung von "poppy gels" oder von festen Kieselsäure ähnlichen Ablagerungen in den Apparaturen begünstigen. Siloxane können im Verfahrensschritt a) beispielsweise auch dadurch zugesetzt werden, dass halogenierte Polysilane, die bereits größere Mengen an Siloxanen enthalten, zugegeben werden.

Als Oxidationsmittel, die die Bildung von Siloxan begünstigen, können beispielsweise trockner Sauerstoff, trockene Luft, Ozon, Phosphinoxide und Kombinationen davon verwendet werden. Phosphinoxide sind besonders geeignet zur Entfernung von Bor-haltigen Verunreinigungen aus halogenierten Polysilanen, die später zur Erzeugung von hoch reinem Silicium verwendet werden, das mit Phosphor dotiert werden soll.

Weiterhin ist es bevorzugt zumindest zu den Bor-haltigen Verunreinigungen stöchiometrische Mengen an Siloxanen beziehungsweise Siloxan-bildenden Oxidationsmitteln zuzugeben. Somit werden bevorzugt mindestens 10 ppbw, weiter bevorzugt mindestens 100 ppbw Siloxan, beziehungsweise Siloxan-bildende Oxidationsmittel im Verfahrensschritt a) hinzugegeben.

Dabei muss allerdings berücksichtigt werden, dass ein signifikanter Sauerstoffgehalt in den halogenierten Polysilanen für viele Anwendungen, beispielsweise auch in der Fotovoltaiktechnik nicht erwünscht ist, so dass weiterhin bevorzugt maximal 10 ppmw (parts per millon per weight) eines Siloxan-bildenden Oxidationsmittels oder Siloxan zugegeben werden, um zu verhindern, dass nach der Reaktion des Siloxan-bildenden Oxidationsmittels beziehungsweise des Siloxans selbst mit den Bor-haltigen Verunreinigungen ein zu großer Überschuss an Sauerstoff-haltigen Verbindungen in den halogenierten Polysilanen zurückbleibt.

Gemäß einer weiteren Ausführungsform des vorliegenden Verfahrens können die halogenierten Polysilane in einem Gemisch erzeugt werden, in dem auch die Siloxane beziehungsweise die Siloxan-bildenden Oxidationsmittel hinzugegeben werden. So ist es beispielsweise möglich halogenierte Polysilane einem Teilabbau mittels einer Chlorierung zu unterwerfen, der in besonders kinetisch stabilen halogenierten Polysilanen mit einer großen Anzahl an Verzweigungen in der Hauptkette resultiert, wobei das zur Chlorierung verwendete Chlorgas gleichzeitig zumindest 1 ppbw Siloxan beziehungsweise Siloxan-bildende Oxidationsmittel aufweist, so dass die durch die Chlorierung gebildeten halogenierten Polysilane gleichzeitig durch die Reaktion der Siloxane mit den Bor-haltigen Verunreinigungen besonders leicht aufgereinigt werden können.

Weiterhin können in dem halogenierten Polysilan zusätzlich metallhaltige Verunreinigungen vorhanden sein, die mit dem Siloxan-bildenden Oxidationsmittel oder Siloxan selbst ebenfalls Verbindungen bilden die eine von den halogenierten Polysilanen unterschiedliche Flüchtigkeit und/oder Löslichkeit aufweisen. Als Verunreinigungen können beispielsweise Titan-, Eisen-, Zinn-, und/oder Aluminium-haltige Verunreinigungen oder Kombinationen davon vorhanden sein, die mit den Siloxanen Polyoximetallate, beispielsweise Heteropolymetallate bilden können, die leicht beispielsweise mittels Destillation oder anderer Verfahren von den halogenierten Polysilanen abgetrennt werden können. Auch phosphorhaltige Verunreinigungen können mit den Siloxanen Verbindungen eingehen.

Als Ausgangsverbindungen für das erfindungsgemäße Verfahren können beliebige verunreinigte Mischungen von halogenierten Polysilanen oder auch nur mit den Verunreinigungen versehene Einzelverbindungen von halogenierten Polysilanen, beispielsweise Hexachlordisilan, Octachlortrisilan oder Dodekachlorneopentasilan oder beliebige andere Silane verwendet werden.

Weiterhin können auch Ausgangsverbindungen zur Synthese der halogenierten Polysilane in verschiedensten Varianten der erfindungemäßen Verfahren verwendet werden, beispielsweise Monosilane der allgemeinen Formel

HₙSiX₄₋ₙ (X = F, Cl, Br, I; n = 0-3).

Diese Monosilane können zum Beispiel mit Inertgasen, wie Stickstoff oder auch zusammen mit Reduktionsmitteln, wie Wasserstoff über beispielsweise thermische oder plasmachemische Verfahren zu den halogenierten Polysilanen umgesetzt werden. Derartige Verfahren sind in den PCT-Anmeldungen WO 2009/143824 A1, WO 2006/125425 A1 und WO 2009/143823 A2 beschrieben.

Bei einigen Varianten von erfindungsgemäßen Verfahren kann im Verfahrensschritt a) bei Temperaturen von Raumtemperatur bis 150 °C gearbeitet werden. Manche der halogenierten Polysilane lösen sich erst bei erhöhten Temperaturen.

Gemäß einer weiteren Ausführungsform eines erfindungsgemäßen Verfahrens können halogenierte Polysilane der folgenden allgemeinen Formel:

HₚSiₙX₍₂ₙ₊₂₎₋ₚ mit n = 3 bis 10; 0 ≤ p ≤ 2n+1 und X = F, Cl, Br, I

verwendet und/oder hergestellt werden, wobei dann im Verfahrensschritt b) die halogenierten Polysilane von den Bor-haltigen durch Reaktion mit den Siloxanen gebildeten Verbindungen mittels Destillation getrennt werden können.

In Vergleich zu den kurzkettigeren halogenierten Polysilanen mit Kettenlängen n zwischen 3 und 10, die sich besonders gut mittels Destillation aus Gemischen abtrennen lassen, sind die durch Reaktion der Siloxane mit den Bor-haltigen Verunreinigungen gebildeten Verbindungen häufig schwer löslich und/oder schwer flüchtig, so dass besonders einfach mittels einer Destillation die halogenierten Polysilane von den Verunreinigungen abgetrennt werden können, was in halogenierten Polysilanen mit einer erhöhten Reinheit resultiert. Bei halogenierten Polysilanen ab einer Kettenlänge von 5 Si-Atomen können auch Kristallisationsmethoden zur Abtrennung zum Einsatz kommen.

Bei höherkettigen halogenierten Polysilanen mit Kettenlängen n größer 10 insbesondere größer 20 kann im Verfahrensschritt b) eine Abtrennung der Verunreinigungen von den halogenierten Polysilanen auch beispielsweise mittels Sublimation, Kristallisation und/oder Zonenschmelzen durchgeführt werden. Beim Zonenschmelzen konzentrieren sich die Bor-haltigen Verbindungen bevorzugt in der Schmelze, so dass sie einfach von den halogenierten Polysilanen abgetrennt werden können. Eine Abtrennung der durch die Reaktion von Siloxanen mit Bor-haltigen Verunreinigungen gebildeten Verbindungen kann bei manchen kurzkettigen Polysilanen, beispielsweise Dodekachlorneopentasilan und/oder neo-Si₆Cl₁₄ auch über Kristallisieren durchgeführt werden, da diese halogenierten Polysilane besonders leicht aus Gemischen halogenierter Polysilane kristallisieren.

Gemäß einer weiteren Ausführungsform der Erfindung können auch halogenierte Polysilane der allgemeinen Formel

SiₙX₂ₙ₊₂ mit n = 2 und X = F, Br, I

insbesondere Hexachlordisilan, über die erfindungsgemäßen Verfahren hergestellt werden.

Weiterhin kann es vorteilhaft sein, wenn während der Abtrennung der Polysilane HCl in Mengen bis 10 Massen-% bevorzugt bis 1 Massen-% anwesend ist, da Chlorwasserstoff die Bildung von Verbindungen durch Reaktion der Siloxane mit dem Bor- und/oder metallhaltigen Verunreinigungen begünstigen kann. HCl kann dabei auch aus dem Herstellungsprozess der halogenierten Polysilane stammen oder separat zugesetzt werden.

Gemäß einer weiteren Ausführungsform eines erfindungsgemäßen Verfahrens ist kein Wasser anwesend, so dass die Bildung von reibungsempfindlichen Zersetzungsprodukten, den "poppy gels" und den unlöslichen Festkörpern, wie beispielsweise den Kieselsäure-ähnlichen Ablagerungen weitgehend vermieden werden kann.

Weiterhin können bei bestimmten Ausführungsformen der erfindungsgemäßen Verfahren Alkohole und/oder Armine in Mengen von maximal 1 ppmw anwesend sein. Amine wie auch Alkohole können zu Reaktionen und Umlagerungen führen und sollten daher nach Möglichkeit vermieden werden.

Weiterhin können gemäß einer weiteren Variante der Erfindung im Verfahrensschritt b) die Bildung von weiteren Siloxanen vermieden werden. Dies kann dann besonders vorteilhaft sein, wenn im Verfahrensschritt a) bereits dafür gesorgt wird, dass ausreichende Mengen Siloxane gebildet werden, so dass nach Reaktion der Siloxane mit dem Bor- und metallhaltigen Verunreinigungen nur noch geringste Mengen der Siloxane in den halogenierten Polysilangemischen verbleiben.

Weiterhin kann der Wasserstoffgehalt der halogenierten Polysilane kleiner als 2 Atom-% insbesondere kleiner als 1 Atom-% sein. Die halogenierten Polysilane können dabei auch Halogensubstituenten mehrerer verschiedener Halogene enthalten.

Insbesondere können die Substituenten des halogenierten Polysilans ausschließlich aus Halogen bestehen. Die halogenierten Polysilane können als Feinchemikalien mit einem sehr hohen Reinheitsgrad von wenigstens 99,5% erhalten werden. Die Verunreinigungen können weniger als 10 ppm betragen.

Weiterhin kann gemäß einer weiteren Variante eines erfindungsgemäßen Verfahrens während des Verfahrensschritts a) und b)in einem Druckbereich von 0,8 bis 300 hPa gearbeitet werden. Insbesondere kann bei der Destillation, Sublimation und der Zugabe des Siloxans oder des Siloxan-bildenden Oxidationsmittels in diesem Druckbereich gearbeitet werden.

Bei halogenierten Polysilanen deren Substituenten ausschließlich aus Halogenen bestehen können noch geringste Mengen anderer Substituenten, beispielsweise Wasserstoffsubstituenten vorhanden sein, wobei die Reinheit aber weiterhin höher als 99,9 % sein kann.

Im Folgenden soll die Erfindung anhand von einem Ausführungsbeispiel noch näher erläutert werden:
Im ersten Schritt wurde aus SiCl₄-Dampf und Wasserstoff in einer Plasmareaktion gemäß der technischen Lehre der PCT-Anmeldung WO 2009/143823 A2 (SiCl₂)ₓ mit x = 9 bis 25 als orangebraunes viskoses Öl hergestellt.

Eine Lösung von (SiCl₂)ₓ in SiCl₄ wurde bei < 450 °C, einem Druck von 300 hPa über 6 h zu einem rotgefärbten Produkt der Zusammensetzung SiCl_{0,5} zersetzt. 9 g dieses Materiales wurden in 55 g Si₂Cl₆ suspendiert. Bei 120 °C wurde Chlorgas, welches 5ppmw Sauerstoff als Siloxan-bildendes Oxidationsmittel enthielt, eingeleitet. Nach 10 h nahm die Reaktionsmischung kein Chlorgas mehr auf. Ein ²⁹Si-NMR-Spektrum der Flüssigkeit zeigte neben einem starken Signal von Si₂Cl₆ nur noch ein sehr schwaches Signal von SiCl₄.

Weitere Chlorsilane sind höchstens in geringer Menge vorhanden. Destillative Aufarbeitung des Produktes ergab 8 Massen-% einer Fraktion aus SiCl₄ mit wenig Si₂Cl₆ und 85 Massen-% einer weiteren Fraktion aus Si₂Cl₆. Der Destillationsrückstand von 7 Massen-% bestand weitgehend aus Si₂Cl₆ mit geringen Mengen unlöslicher Feststoffe. Ein Vergleich des Borgehaltes des erhaltenen Si₂Cl₆ von ≤ 10 µg/kg mit dem Borgehalt des Ausgangsmaterials SiCl₄ von ≤ 500 µg/kg zeigt, dass über den gesamten Herstellungsprozess eine sehr effektive Entfernung des Bors aus den Halogensilanen von anfänglich ca. 0,5 ppmw auf unter 10 ppbw erreicht werden konnte. Der Eisengehalt geht von ≤ 100 µg/kg im SiCl₄ auf < 10 µg/kg im Si₂Cl₆ zurück und der Gehalt an Aluminium geht von ≤ 100 µg/kg im SiCl₄ auf < 20 µg/kg im Si₂Cl₆ zurück.

## Patentansprüche

1. Verfahren zur Herstellung eines halogenierten Polysilans HₚSiₙX₍₂ₙ₊₂₎₋ₚ mit n = 1 bis 50; 0 ≤ p ≤ 2n+1 und X = F, Cl, Br, I-als Einzel-Verbindung oder Gemisch von Verbindungen, aus einem Gemisch das das halogenierte Polysilan enthält oder in dem das halogenierte Polysilan gebildet wird, zusätzlich enthaltend bor-haltige Verunreinigungen, wobei
a) das Gemisch mit mindestens 1 ppbw (parts per billion per weight) eines Siloxan bildenden Oxidationsmittels oder Siloxan versetzt wird, wobei die bor-haltigen Verunreinigungen Verbindungen mit einer von den halogenierten Polysilanen unterschiedlichen Flüchtigkeit und/oder Löslichkeit bilden, und
b) das halogeniertes Polysilan von diesen Verbindungen abgetrennt wird,
- wobei während des Verfahrens maximal 1 ppmw Wasser und minimal 1 ppbw Siloxane anwesend sind.

2. Verfahren nach dem vorhergehenden Anspruch, wobei das Siloxan bildende Oxidationsmittel ausgewählt ist aus: trockenen Sauerstoff, trockener Luft, Ozon und Phosphinoxiden und Kombinationen davon.

3. Verfahren nach einem der vorhergehenden Ansprüche, wobei mindestens 10 ppbw, bevorzugt 100 ppbw, weiter bevorzugt maximal 10 ppmw (parts per million per weight) eines Siloxan bildenden Oxidationsmittels oder Siloxan zugegeben werden.

4. Verfahren nach einem der vorhergehenden Ansprüche, wobei in dem halogenierten Polysilan zusätzlich Metallhaltige Verunreinigungen vorhanden sind, die mit dem Siloxan bildenden Oxidationsmittel oder Siloxan die Verbindungen mit einer von den halogenierten Polysilanen unterschiedlichen Flüchtigkeit und/oder Löslichkeit bilden.

5. Verfahren nach dem vorhergehenden Anspruch, wobei die Metall-haltigen Verunreinigungen ausgewählt sind aus: Ti-, Fe-, Sn- und/oder Al-haltigen Verunreinigungen oder Kombinationen davon.

6. Verfahren nach einem der vorhergehenden Ansprüche, wobei im Verfahrensschritt a) bei einer Temperatur von Raumtemperatur bis 150°C gearbeitet wird.

7. Verfahren nach einem der vorhergehenden Ansprüche, wobei im Verfahrensschritt b) das halogenierte Polysilan von den Verbindungen mittels Destillation, Sublimation, Kristallisation und/oder Zonenschmelzen abgetrennt wird.

8. Verfahren nach einem der vorhergehenden Ansprüche, zur Herstellung von halogenierten Polysilanen HₚSiₙX₍₂ₙ₊₂₎₋ₚ mit n = 3 bis 10; 0 ≤ p ≤ 2n+1 und X = F, Cl, Br, I, wobei im Verfahrensschritt b) die halogenierten Polysilane von den Verbindungen mittels Destillation getrennt werden.

9. Verfahren nach einem der vorherigen Ansprüche, wobei das Siloxan eine Verbindung der allgemeinen Formel R¹R²R³Si-O-SiR⁴R⁵R⁶, wobei R¹ bis R⁶ unabhängig voneinander Cl, F, Br, I, H, SiR¹R²R³ und -O-SiR¹R²R³ sein können, ist.

10. Verfahren nach einem der vorhergehenden Ansprüche zur Herstellung eines halogenierten Polysilans SiₙX₂ₙ₊₂ mit n = 2 und X = F, Br, I, bevorzugt X = Cl.

11. Verfahren nach einem der vorhergehenden Ansprüche, wobei während der Isolierung der halogenierten Polysilane HCl in Mengen bis 10 Massen-%, bevorzugt bis 1 Massen-% anwesend ist.

12. Verfahren nach einem der vorangehenden Ansprüche, wobei kein Wasser anwesend ist und/oder
wobei Alkohole und/oder Amine in Mengen von maximal 1 ppmw anwesend sind.

13. Verfahren nach einem der vorangehenden Ansprüche, wobei der Wasserstoffgehalt des halogenierten Polysilans kleiner als 2 Atom-%, insbesondere kleiner als 1 Atom-% ist.

14. Verfahren nach einem der vorangehenden Ansprüche, wobei das halogenierte Polysilan Halogensubstituenten mehrerer verschiedener Halogene enthält.

15. Verfahren nach einem der vorangehenden Ansprüche, wobei während des Verfahrensschritts a) und b) in einem Druckbereich von 0,8-300 hPa gearbeitet wird.

## Claims

1. Process for preparing a halogenated polysilane HpSiₙX₍₂ₙ₊₂₎₋ₚ with n = 1 to 50; 0 ≤ p ≤ 2n+1, and X = F, Cl, Br, I, as individual compound or mixture of compounds, from a mixture which comprises the halogenated polysilane or in which the halogenated polysilane is formed, additionally comprising boron-containing impurities, where
a) the mixture is admixed with at least 1 ppbw (parts per billion per weight) of a siloxane-forming oxidizing agent or siloxane, the boron-containing impurities forming compounds having a volatility and/or solubility which is different from the halogenated polysilanes, and
b) the halogenated polysilane is removed from these compounds,
- where during the process not more than 1 ppmw of water and not less than 1 ppbw of siloxanes are present.

2. Process according to the preceding claim, where the siloxane-forming oxidizing agent is selected from: dry oxygen, dry air, ozone, and phosphine oxides, and combinations thereof.

3. Process according to either of the preceding claims, where at least 10 ppbw, preferably 100 ppbw, more preferably not more than 10 ppmw (parts per million per weight) of a siloxane-forming oxidizing agent or siloxane are added.

4. Process according to any of the preceding claims, where the halogenated polysilane further comprises metal-containing impurities which form with the siloxane-forming oxidizing agent or siloxane the compounds having a volatility and/or solubility which is different from the halogenated polysilanes.

5. Process according to the preceding claim, where the metal-containing impurities are selected from: Ti-, Fe-, Sn- and/or Al-containing impurities or combinations thereof.

6. Process according to any of the preceding claims, where process step a) is operated at a temperature from room temperature to 150°C.

7. Process according to any of the preceding claims, where in process step b) the halogenated polysilane is removed from the compounds by distillation, sublimation, crystallization and/or zonal melting.

8. Process according to any of the preceding claims, for the preparation of halogenated polysilanes HₚSiₙX₍₂ₙ₊₂₎₋ₚ with n = 3 to 10; 0 ≤ p ≤ 2n+1, and X = F, Cl, Br, I, where in process step b) the halogenated polysilanes are separated from the compounds by distillation.

9. Process according to any of the preceding claims, where the siloxane is a compound of the general formula R¹R²R³Si-O-SiR⁴R⁵R⁶, where R¹ to R⁶ independently of one another may be Cl, F, Br, I, H, SiR¹R²R³, and -O-SiR¹R²R³.

10. Process according to any of the preceding claims for the preparation of a halogenated polysilane SiₙX₂ₙ₊₂ with n = 2 and X = F, Br, I, preferably X = Cl.

11. Process according to any of the preceding claims, where during the isolation of the halogenated polysilanes, HCl is present in amounts up to 10% by mass, preferably up to 1% by mass.

12. The process according to any of the preceding claims, where no water is present and/or where alcohols and/or amines are present in amounts of not more than 1 ppmw.

13. Process according to any of the preceding claims, where the hydrogen content of the halogenated polysilane is less than 2 atom%, particularly less than 1 atom%.

14. The process according to any of the preceding claims, where the halogenated polysilane comprises halogen substituents of several different halogens.

15. Process according to any of the preceding claims, where process steps a) and b) are operated in a pressure range of 0.8-300 hPa.

## Revendications

1. Procédé pour la préparation d'un polysilane halogéné HₚSiₙX₍₂ₙ₊₂₎₋ₚ, où n = 1 à 50 ; 0 ≤ p ≤ 2n + 1 et X = F, Cl, Br, I comme composé unique ou sous forme de mélange de composés, à partir d'un mélange qui contient le polysilane halogéné ou dans lequel le polysilane halogéné est formé, contenant en outre des impuretés contenant du bore, où
a) le mélange est additionné d'au moins 1 ppbw (parts per billion per weight - parts par milliard en poids) d'un oxydant formant du siloxane ou de siloxane, les impuretés contenant du bore formant des composés présentant une volatilité et/ou une solubilité différente (s) de celle(s) des polysilanes halogénés, et
b) le polysilane halogéné est séparé de ces composés,
- au maximum 1 ppmw d'eau et au minimum 1 ppbw de siloxanes étant présents pendant le procédé.

2. Procédé selon la revendication précédente, l'oxydant formant du siloxane étant choisi parmi : l'oxygène anhydre, l'air anhydre, l'ozone et les oxydes de phosphine et leurs combinaisons.

3. Procédé selon l'une quelconque des revendications précédentes, au moins 10 ppbw, de préférence 100 ppbw, plus préférablement au maximum 10 ppmw (parts per million per weight - parts par million en poids) d'un oxydant formant du siloxane ou d'un siloxane étant ajoutés.

4. Procédé selon l'une quelconque des revendications précédentes, le polysilane halogéné contenant en outre des impuretés contenant des métaux, qui forment avec l'oxydant formant du siloxane ou le siloxane, les composés présentant une volatilité et/ou une solubilité différente(s) de celle(s) des polysilanes halogénés.

5. Procédé selon la revendication précédente, les impuretés contenant des métaux étant choisies parmi les impuretés contenant Ti, Fe, Sn et/ou Al ou leurs combinaisons.

6. Procédé selon l'une quelconque des revendications précédentes, en travaillant, dans l'étape de procédé a), à une température allant de la température ambiante à 150°C.

7. Procédé selon l'une quelconque des revendications précédentes, en séparant, dans l'étape de procédé b), le polysilane halogéné des composés par distillation, sublimation, cristallisation et/ou fusion par zones.

8. Procédé selon l'une quelconque des revendications précédentes, pour la préparation de polysilanes halogénés HpSiₙX₍₂ₙ₊₂₎₋ₚ, où n = 3 à 10 ; 0 ≤ p ≤ 2n + 1 et X = F, Cl, Br, I, en séparant, dans l'étape de procédé b), les polysilanes halogénés des composés par distillation.

9. Procédé selon l'une quelconque des revendications précédentes, le siloxane étant un composé de formule générale R¹R²R³Si-O-SiR⁴R⁵R⁶, R¹ à R⁶ pouvant représenter, indépendamment les uns des autres, Cl, F, Br, I, H, SiR¹R²R³ et -O-SiR¹R²R³.

10. Procédé selon l'une quelconque des revendications précédentes pour la préparation d'un polysilane halogéné SiₙX₂ₙ₊₂, où n = 2 et X = F, Br, I, de préférence X = Cl.

11. Procédé selon l'une quelconque des revendications précédentes, du HC1 étant présent en des quantités jusqu'à 10% en masse, de préférence jusqu'à 1% en masse, pendant l'isolement des polysilanes halogénés.

12. Procédé selon l'une quelconque des revendications précédentes, sans présence d'eau et/ou en présence de quantités d'au maximum 1 ppmw d'alcools et/ou d'amines.

13. Procédé selon l'une quelconque des revendications précédentes, la teneur en hydrogène du polysilane halogéné était inférieure à 2% en atome, en particulier inférieure à 1% en atome.

14. Procédé selon l'une quelconque des revendications précédentes, le polysilane halogéné contenant des substituants halogénés de plusieurs halogènes différents.

15. Procédé selon l'une quelconque des revendications précédentes, en travaillant, pendant les étapes de procédé a) et b), dans une plage de pression de 0,8-300 hPa.
